# EUROPEAN PATENT APPLICATION

(11) **EP 4 632 027 A1**
(43) Date of publication of application: **15.10.2025**
(21) Application number: 23900764.4
(22) Date of filing: 11.12.2023
(51) Int. Cl.: C09D 201/00, B32B 27/00, B32B 27/26, B32B 27/40, C09D 175/04, F16F 1/12, C08J 9/02

(54) **COATING MATERIAL, COATING LAYER, AND SPRING**

(30) Priority: 09.12.2022 JP 2022197522
(71) Applicant: NHK Spring Co., Ltd., Kanagawa 236-0004 (JP)
(72) Inventor: MATSUDA, Tsuyoshi, Yokohama-shi, Kanagawa 236-0004 (JP); KITAGAWA, Naoyuki, Yokohama-shi, Kanagawa 236-0004 (JP); ARISAKA, Norihumi, Yokohama-shi, Kanagawa 236-0004 (JP); IBANO, Daisuke, Yokohama-shi, Kanagawa 236-0004 (JP); ITO, Chihiro, Yokohama-shi, Kanagawa 236-0004 (JP)
(74) Representative: DREISS Patentanwälte PartG mbB
(86) International application number: PCT/JP2023/044302
(87) International publication number: WO 2024/122655

(57) **Abstract**

A coating material, a coating layer, and a spring using the same, in which in a cured product layer after curing, a bubble ratio in an inner layer on a coated surface side is higher than a bubble ratio in a surface layer on a side opposite from the coated surface side.

## Description

### Technical Field

The present disclosure relates to a coating material, a coating layer, and a spring.

### Background Art

Various springs are used in automobiles, railway vehicles, and the like. Many of these springs are made of steel, and their surfaces are usually coated with paint to impart corrosion resistance.

For example, Patent Document 1 discloses "a method of forming a coated portion of a coil spring, wherein at least a portion in the axial direction of a coil spring preheated to a predetermined surface temperature is rolled in a trough-shaped container containing thermoplastic resin powder having a melting point of 250°C or lower, and the resin powder adhering to the spring wire of the coil spring is heated, melted, and then solidified".

Patent Document 2 discloses "a highly durable spring having a single-layer coating film with a thickness of 450 µm or less, wherein the coating film contains an epoxy resin, a phenol resin, and zinc". Patent Document 2 also discloses that "the coating film is a cured product of an epoxy resin-based powder coating material containing an epoxy resin, a phenol resin, and zinc".

Patent Document 3 discloses "a chip-resistant powder top coat on a steel substrate having a corrosion-resistant powder coating base coat thereon, the chip-resistant powder top coat including a cured or fused product of a coating powder including: one or more resin components of one or more reinforced epoxy resins; 0.1 to 5 parts (phr) of one or more waxes per 100 parts of resin; and optionally, up to 200 phr of one or more extenders".

Patent Document 4 discloses "a suspension spring which is used in a suspension of a vehicle, wherein a coating film is made thicker, than in portions adjacent to that portion, in a portion satisfying at least one of the following conditions: a stress during use is higher than in other portions; or a probability of coating film damage due to flying stones is higher than in other portions".

### Prior Art Documents

### Patent Documents

Patent Document 1: Japanese Patent Application Laid-Open (JP-A) No. S57-136972
Patent Document 2: International Publication (WO) No. 2017/163877
Patent Document 1: JP-A No. 2009-120812
Patent Document 1: JP-A No. 2007-308067

### SUMMARY OF INVENTION

### Technical Problem

In a spring having a cured product layer (coating layer) formed by applying a coating material for a spring, when contact occurs between the spring and another article, or between parts of the spring itself (for example, between wire rods of a coil spring in a case where the spring is a coil spring), abnormal noise may occur even through contact via the coating layer. The coating layer is also required to have mechanical strength (such as abrasion resistance, tear strength, or adhesive shear stress).

It is required to suppress generation of abnormal noise while securing mechanical strength, but the present situation is not sufficiently studied. This is similarly required for articles other than springs.

Therefore, an object of the present disclosure is to provide a coating material that forms a cured product layer capable of suppressing generation of abnormal noise while securing mechanical strength, a coating layer capable of suppressing generation of abnormal noise, and a spring using the same.

### Solution to Problem

Means for solving the above problem include the following aspects.
<1> A coating material, in which, in a cured product layer after curing, a bubble ratio in an inner layer on a coated side surface is higher than a bubble ratio in a surface layer on a side opposite from the coated surface side.
<2> The coating material according to <1>, in which the bubble ratio in the surface layer is from 0% to 30%, and the bubble ratio in the inner layer is from 3% to 70%.
<3> The coating material according to <1> or <2>, in which an abrasion loss of the cured product layer after curing, as measured using a Taber abrasion tester, is 150 mg or less.
<4> The coating material according to any one of <1> to <3>, in which the cured product layer after curing has a tear strength of 40 N/mm or more after being exposed to an environment having a temperature of 85°C and a humidity of 85% for 240 hours.
<5> The coating material according to any one of <1> to <4>, in which the cured product layer after curing is a cured product having a urethane bond.
<6> The coating material according to any one of <1> to <5>, which is for use in a spring.
<7> A coating layer, in which a bubble ratio in an inner layer on a coated surface side is higher than a bubble ratio in a surface layer on a side opposite from the coated surface side.
<8> The coating layer according to <7>, in which the bubble ratio in the surface layer is from 0% to 30%, and the bubble ratio in the inner layer is from 3% to 70%.
<9> The coating layer according to <7> or <8>, in which an abrasion loss, as measured using a Taber abrasion tester, is 150 mg or less.
<10> The coating layer according to any one of <7> to <9>, which has a tear strength of 40 N/mm or more after being exposed to an environment having a temperature of 85°C and a humidity of 85% for 240 hours.
<11> The coating layer according to any one of <7> to <9>, consisting of a cured product having a urethane bond.
<12> The coating layer according to any one of <7> to <10>, which is for use in a spring.
<13> A spring including the coating layer according to any one of <7> to <12> on at least a part of a surface thereof.

### Advantageous Effects of Invention

According to the present disclosure, there can be provided a coating material that forms a cured product layer capable of suppressing generation of abnormal noise while securing mechanical strength, a coating layer capable of suppressing generation of abnormal noise, and a spring using the same.

### DESCRIPTION OF EMBODIMENTS

An exemplary embodiment of the present disclosure will be described below. These descriptions and examples are intended to illustrate the present disclosure and are not intended to limit the scope of the present disclosure.

In the present specification, a numerical range expressed using "to" represents a range including the numerical values stated before and after "to" as the minimum value and the maximum value, respectively.

In numerical ranges described stepwise in the present specification, an upper limit value or a lower limit value stated in one numerical range may be replaced with an upper limit value or a lower limit value of another numerical range described stepwise. In a numerical range described in the present disclosure, the upper limit value or the lower limit value of the numerical range may be replaced with a value shown in the Examples.

In the present specification, each component may contain a plurality of substances corresponding thereto. In a case where the amount of each component is referred to in the present specification, if a plurality of substances corresponding to the component are present, the amount refers to the total amount of the plurality of substances unless otherwise specified.

### (Coating Material/Coating Layer)

In the coating material according to the present embodiment, a bubble ratio in an inner layer on the coated surface side in the cured product layer (i.e., the coating layer) after curing is higher than a bubble ratio in a surface layer on the side opposite from the coated surface side.

Here, the surface layer refers to a layer on the side opposite from the coated surface side, with the boundary defined as 1/2 of the thickness of the cured product layer (coating layer). The inner layer refers to a layer on the coated surface side, with the boundary defined as 1/2 of the thickness of the cured product layer (coating layer).

In the coating material according to the present embodiment, the bubbles in the cured product layer (coating layer) after curing reflect and attenuate the sound generated during contact, and the sound pressure of the generated sound can be reduced. The bubble ratio in the inner layer on the coated surface side is set higher than the bubble ratio in the surface layer on the side opposite from the coated surface side, thereby reducing the presence of bubbles that serve as starting points for a decrease in mechanical strength in the surface layer.

Therefore, a cured product layer after curing capable of suppressing generation of abnormal noise while securing mechanical strength can be formed.

The coating layer according to the present embodiment can suppress generation of abnormal noise while securing mechanical strength.

Details of the coating material and the coating layer according to the present embodiment will be described below.

Hereinafter, the cured product layer after curing of the coating material according to the present embodiment is referred to as a "coating layer".

### (Characteristics)

### -Bubble Ratio-

In the coating material according to the present embodiment, the bubble ratio in the inner layer on the coated surface side is preferably from 3% to 70%, and more preferably from 3% to 50%.

The bubble ratio in the surface layer on the side opposite from the coated surface side is preferably from 0% to 30%, and more preferably from 0% to 15%.

A difference in the bubble ratio between the inner layer and the surface layer is preferably from 3% to 70%, and more preferably from 3% to 40%.

In a case where the bubble ratios of the surface layer and the inner layer are within the above range and the above relationship, generation of abnormal noise in the inner layer can be suppressed while securing mechanical strength (such as abrasion resistance, tear strength, or adhesive shear stress) in the surface layer.

In particular, in a case where the bubble ratio in the surface layer is set to be low within the above range, formation of recesses caused by bubbles on the surface of the cured product layer (coating layer) can be suppressed.

For example, acceleration of wear on a surface in contact with which the cured product layer (coating layer) (such as a surface of another article or a surface of a coating layer of another article) caused when a hard granular material such as sand grains is sandwiched in a recess and vibration is applied to the cured product layer (coating layer), can be suppressed.

In addition, the acceleration of hydrolysis caused by an increase in a specific surface area due to recess formation on the surface of the cured product layer (coating layer) can be suppressed. As a result, a decrease in mechanical strength (such as abrasion resistance, tear strength, or adhesive shear stress) can be suppressed.

From the viewpoint of improving mechanical strength (such as abrasion resistance, tear strength, or adhesive shear stress) and suppressing abnormal noise, the bubble ratio in the entire cured product layer (i.e., the entire coating layer) is preferably from 1.5% to 50%, more preferably from 1.5% to 35%, and still more preferably from 5% to 35%.

When the bubble ratios of the entire cured product layer (i.e., the entire coating layer) and the inner layer increase, the tear strength decreases, and the durability as a coating layer also tends to decrease. Therefore, the bubble ratios of the entire cured product layer (i.e., the entire coating layer) and the inner layer are preferably in the above ranges.

Examples of methods of forming the cured product layer (coating layer) after curing include adopting the preparation methods of the coating material described in (1) to (3) below, and adding a defoaming agent to the coating material. Accordingly, when a cured product layer (coating layer) is formed using a one-liquid coating material, bubbles are less likely to form on the surface layer and more likely to form in the inner layer.
(1) A method in which a foaming agent that expands when heated is incorporated into a coating material.
(2) A method in which a gas is dissolved in a coating material by preliminarily stirring raw materials, and bubbles are grown using the gas as a nucleus at the time of forming a coating layer.
(3) A method in which, when the cured product layer after curing is a cured product layer having a urethane bond, water is added to the coating layer to generate carbon dioxide through a reaction with isocyanate and thereby causing foaming.

As a method of forming the cured product layer (coating layer) after curing, for example, a method may be adopted in which a coating material for the inner layer that tends to generate bubbles and a coating material for the surface layer that tends to suppress bubbles are prepared respectively using the methods described in (1) to (3), and the inner layer and the surface layer are formed using these coating materials.

The cured product layer (coating layer) after curing may be formed using three or more types of liquid coating materials. That is, the cured product layer (coating layer) after curing may be composed of multiple layers.

The method for measuring bubble ratios of the surface layer and the inner layer is as follows.

First, samples (i.e., samples obtained by cutting and separating the coating layer at the midpoint of its thickness) of the surface layer and the inner layer are collected from the cured product layer (coating layer) after curing.

The bubble ratios of the surface layer and the inner layer are measured using these samples by a water specific gravity method using the specific gravity measurement kit "AD-1654" manufactured by A&D Company, Limited.

The bubble ratio in the entire cured product layer (i.e., the entire coating layer) after curing is defined as the arithmetic average of the bubble ratios of the surface layer and the inner layer.

### -Average Diameter of Bubbles-

The average diameter of bubbles in the cured product layer (coating layer) after curing is preferably from 30 µm to 2000 µm, more preferably from 30 µm to 1200 µm, and still more preferably from 30 µm to 700 µm from the viewpoint of mechanical strength and suppression of abnormal noise.

In a case where the average diameter of bubbles in the cured product layer (coating layer) after curing is within the above range, a decrease in tear strength due to a localized reduction in layer thickness caused by an increase in bubble diameter can be suppressed. In addition, sound vibration can be suppressed from direct transmission from the surface of the cured product layer (coating layer) after curing to the interface with the article, thereby enhancing the abnormal noise suppressing effect. Furthermore, irregularities are less likely to occur on the surface of the cured product layer (coating layer) after curing.

The average diameter of the bubbles can be adjusted by, for example, the following methods (11) to (13):
(11) In the above method (1), in which a foaming agent that expands when heated is added to a coating material, a foam stabilizer is added to the coating material together with the foaming agent.
(12) In the above method (2), in which gas is dissolved in a coating material by preliminarily stirring raw materials, and bubbles are grown using the gas as a nucleus at the time of forming a coating layer, a foam stabilizer is added to the coating material.
(13) In the above method (3), in which, when the cured product layer after curing is a cured product layer having a urethane bond, water is added to the coating layer to generate carbon dioxide through a reaction with isocyanate and thereby causing foaming, a foam stabilizer is added to the coating material together with the water.

A method of measuring the average diameter of the bubbles in the cured product layer (coating layer) after curing is as follows.

First, a sample is obtained from the cured product layer (coating layer) after curing, which is the target of measurement, by slicing it in parallel to the thickness direction.

The cut surface of the sample is observed as an observation surface using an optical microscope ("One-shot 3D Shape Measuring Machine Head VR-3100" manufactured by Keyence Corporation).

In respective regions of the surface layer and the inner layer in the observation image, the maximum diameters of ten randomly selected bubbles are measured, and the arithmetic average of a total of twenty maximum diameters is taken as the average diameter of the bubbles.

### -Abrasion Loss-

The abrasion loss of the cured product layer (coating layer) after curing, as measured using a Taber abrasion tester, is preferably 150 mg or less, and more preferably 100 mg or less.

Here, the abrasion loss is measured in accordance with JIS K 7204:1999 using a Taber abrasion tester. The measurement conditions are as follows.
· Abrasive wheel: Taber-type H22 abrasive wheel
· Load of the abrasive wheel: 1000 gf
· Rotation speed of the abrasive wheel: 60 rpm
· Number of rotations: 1000 rotations

### -Tear Strength After Degradation Test-

The cured product layer (coating layer) after curing has a tear strength of preferably 40 N/mm or more, more preferably 45 N/mm or more, and still more preferably 60 N/mm or more after being exposed to an environment having a temperature of 85°C and a humidity of 85% for 240 hours.

Here, the tear strength is measured in accordance with a tear test defined in JIS K 7311:1995.

However, for the test piece, a test piece was prepared by forming a 2 mm thick cured product layer (coating layer) on an SPCC steel sheet (thickness 1.6 mm, width 70 mm, length 150 mm) with a release film attached, and a degradation test was performed. Thereafter, the cured product layer (coating layer) peeled off from the release film was punched into the shape of a tear test piece, and the tear test was performed.

### (Composition)

The coating material according to the present embodiment may be either a thermoplastic resin composition or a composition for forming a thermosetting resin, as long as it can form a cured product layer satisfying the above characteristics.

Examples of thermoplastic resins include acrylic resins, polystyrene resins, polyethylene resins, polypropylene resins, polyamide resins, nylon resins, vinyl chloride resins, polyacetal resins, polycarbonate resins, polyphenylene ether resins, polybutylene terephthalate resins, polyphenylene sulfone resins, polysulfone resins, polyarylate resins, and polyetherimide resins.

Examples of thermosetting resins include urethane resins, epoxy resins, cyanate resins, melamine resins, and phenol resins.

Other examples include rubber materials such as natural rubber, butadiene rubber, chloroprene rubber, nitrile butadiene rubber, and styrene butadiene rubber.

Among these materials, in the coating material according to the present embodiment, the cured product layer after curing preferably has a urethane bond, and more specifically, is preferably a urethane resin layer.

In particular, the coating material according to the present embodiment is preferably a composition containing (A) a macromolecular polyol, (B) an isocyanate, and (C) a chain extender, or a composition containing (D) a prepolymer obtained by reaction between a polyol and an isocyanate.

### [Composition Containing (A) Macromolecular Polyol, (B) Isocyanate, and (C) Chain Extender]

### -(A) Macromolecular Polyol-

(A) The macromolecular polyol preferably contains at least one selected from the group consisting of (A1) a polycarbonate-based polyol, (A2) a polyether-based polyol having a bisphenol structure, (A3) a lactone-based polyol, (A4) a polyester-based polyol, and (A5) a copolymer of a polycarbonate-based polyol and a lactone-based polyol, from the viewpoint of improving durability at normal and high temperatures and impact resistance at low temperatures.

Examples of (A1) the polycarbonate-based polyol include, for example, a polyol obtained by reaction between a glycol with an alkylene carbonate, a polyol obtained by reaction between a glycol and a diaryl carbonate, and a polyol obtained by reaction between a glycol and a dialkyl carbonate.

Examples of the alkylene carbonate include, for example, ethylene carbonate, 1,2-propylene carbonate, and 1,2-butylene carbonate.

Examples of the diaryl carbonate include, for example, diphenyl carbonate, 4-methyldiphenyl carbonate, 4-ethyldiphenyl carbonate, 4-propyldiphenyl carbonate, 4,4'-dimethyldiphenyl carbonate, 2-tolyl-4-tolyl carbonate, 4,4'-diethyldiphenyl carbonate, 4,4'-dipropyldiphenyl carbonate, phenyltoluyl carbonate, bischlorophenyl carbonate, phenylchlorophenyl carbonate, phenylnaphthyl carbonate, and dinaphthyl carbonate.

Examples of the dialkyl carbonate include, for example, dimethyl carbonate, diethyl carbonate, di-n-propyl carbonate, diisopropyl carbonate, di-n-butyl carbonate, diisobutyl carbonate, di-t-butyl carbonate, di-n-amyl carbonate, and diisoamyl carbonate.

Examples of (A2) the polyether-based polyol having a bisphenol structure include a polyether polyol obtained by adding polyethylene oxide and/or polypropylene oxide to a cyclic diol (such as bisphenol A, hydrogenated bisphenol A, bisphenol S, or bisphenol P), a propylene oxide adduct of bisphenol A, an ethylene oxide adduct of bisphenol A, an ethylene oxide adduct of hydrogenated bisphenol A, and a propylene oxide adduct of hydrogenated bisphenol A.

Among these, as the polyether-based polyol, a propylene oxide adduct of bisphenol A is preferable.

Examples of (A3) the lactone-based polyol include ring-opening polymers of lactones (such as ε-caprolactone and β-methyl-δ-valerolactone).

Among these, a ring-opening polymer of caprolactone (caprolactone-based polyol) is preferable.

Examples of (A4) the polyester-based polyol include a condensation polyester-based polyol of a polybasic acid and a polyhydric alcohol other than a lactone-based polyol.

Examples of the polybasic acid include polyvalent carboxylic acids. Specific examples of the polybasic acid include phthalic acid, isophthalic acid, tetrahydrophthalic acid, tetrahydroisophthalic acid, hexahydrophthalic acid, hexahydroterephthalic acid, trimellitic acid, adipic acid, sebacic acid, succinic acid, azelaic acid, fumaric acid, maleic acid, itaconic acid, pyromellitic acid, and acid anhydrides thereof.

Examples of the polyhydric alcohol include glycols and polyhydric alcohols having a valence of 3 or more. Specific examples of the glycol include ethylene glycol, propylene glycol, diethylene glycol, triethylene glycol, tetraethylene glycol, dipropylene glycol, polyethylene glycol, polypropylene glycol, neopentyl glycol, hexylene glycol, 1,3-butanediol, 1,4-butanediol, 1,5-pentanediol, 1,6-hexanediol, 2-butyl-2-ethyl-1,3-propanediol, methylpropanediol, cyclohexanedimethanol, and 3,3-diethyl-1,5-pentanediol. Specific examples of the polyhydric alcohol having a valence of 3 or more include glycerin, trimethylolethane, trimethylolpropane, pentaerythritol, and dipentaerythritol.

Examples of (A5) the copolymer of a polycarbonate-based polyol and a lactone-based polyol include a copolymer of (A1) the polycarbonate-based polyol and (A3) the lactone-based polyol.

(A) The macromolecular polyol may be used singly or in combination of two or more kinds thereof.

The number average molecular weight of (A) the macromolecular polyol is preferably from 300 to 12000, and more preferably from 800 to 4000.

Here, the number average molecular weight is a molecular weight obtained from the measured hydroxyl value according to JIS K 0070 and the number of functional groups. The number average molecular weights of other components are also measured in the same manner.

### -(B) Isocyanate-

Examples of (B) the isocyanate include well-known polyisocyanates such as aromatic diisocyanates such as 2,4-tolylene diisocyanate, 2,6-tolylene diisocyanate, diphenylmethane diisocyanate, m-phenylene diisocyanate, p-phenylene diisocyanate, xylene-1,4-diisocyanate, 1,5-naphthylene diisocyanate, 1,4-naphthylene diisocyanate, and 3,3'-dichloro-4,4'-diphenylmethane diisocyanate; aliphatic diisocyanates such as hexamethylene diisocyanate, propylene-1,2-diisocyanate, and butylene-1,2-diisocyanate; and alicyclic diisocyanates such as isophorone diisocyanate, 4,4'-dicyclohexylmethane diisocyanate, and cyclohexylene diisocyanate.

(B) The isocyanate may be used singly or in combination of two or more kinds thereof.

### -(C) Chain Extender-

Examples of (C) the chain extender include polyols having from two to four functional groups and a molecular weight of from 60 to 300.

Examples of the polyols having two functional groups include aliphatic diols such as ethylene glycol, propylene glycol, butanediol, pentanediol, neopentyl glycol, methylpentanediol, hexanediol, heptanediol, octanediol, nonanediol, decanediol, and dodecanediol; cycloaliphatic diols such as cyclohexanediol and hydrogenated xylylene glycol; aromatic diols such as xylylene glycol; and polyether polyols obtained by addition polymerization of an alkylene oxide (such as ethylene oxide or propylene oxide) to a dihydric alcohol. The addition polymerization of plural kinds of alkylene oxides may be random addition polymerization or block addition polymerization.

Examples of the polyols having three functional groups include trihydric alcohols, for example, trihydric alcohols having 3 to 10 carbon atoms, such as glycerin or trimethylolpropane. Examples of the polyols having three functional groups also include polyether polyols obtained by addition polymerization of an alkylene oxide (such as ethylene oxide or propylene oxide) to a trihydric alcohol. The addition polymerization of plural kinds of alkylene oxides may be random addition polymerization or block addition polymerization.

Examples of the polyols having four functional groups include polyether polyols obtained by addition polymerization of an alkylene oxide to ethylenediamine, pentaerythritol, or the like.

In addition, an ester-based polyol obtained by condensation of ethylene glycol or 1,4-butanediol of adipic acid and a short chain diol with a polyfunctional triol such as glycerin can be used as examples of a low molecular weight polyol.

(C) The chain extender may be used singly or in combination of two or more kinds thereof. The polyisocyanate may be reacted in advance as a prepolymer.

Among these, as (C) the chain extender, ethylene glycol, 1,4-butanediol, 1,6-hexanediol, trimethylolpropane, and glycerin are preferable, and 1,4-butanediol and 1,6-hexanediol are more preferable, from the viewpoint of improving durability at normal and high temperatures and impact resistance at low temperatures.

### [Composition Containing (D) Prepolymer Obtained by Reaction Between Polyol and Isocyanate]

### -(D) Prepolymer-

The prepolymer is a prepolymer obtained by reaction between a polyol and an isocyanate.

Examples of the polyol include (A) the macromolecular polyol and the low molecular weight polyol exemplified in (C) the chain extender.

Examples of the isocyanate include (B) the isocyanate.

The composition containing (D) the prepolymer may contain, in addition to (D) the prepolymer, at least one selected from the group consisting of (A) the macromolecular polyol, (B) the isocyanate, and (C) the chain extender.

### -Other Components-

The coating material according to the present embodiment may contain other components.

Examples of other components include well-known additives such as a catalyst, a thickener, an antioxidant, a colorant, an ultraviolet absorber, an inorganic filler (such as calcium carbonate), water, a foam stabilizer, and a defoaming agent.

In order to improve mechanical characteristics in a warm state, the heat resistance of the coating material can be improved by making the structure of the resin itself more heat-resistant, or by adding a crosslinking agent or a reinforcing agent (such as CNT).

### -Ratio of Components-

An equivalent ratio ((A+C)/(B+D)) of (A) the macromolecular polyol and (C) the chain extender to (B) the isocyanate and (D) the prepolymer obtained by reaction between a polyol and an isocyanate is preferably from 0.5 to 1.5, or from 0.8 to 1.2.

A mass ratio (A/C) of (A) the macromolecular polyol to (C) the chain extender is preferably from 1.0 to 35.0, or from 1.5 to 10.0.

The mass ratio (D/C) of (D) the prepolymer obtained by reaction between a polyol and an isocyanate to (C) the chain extender is preferably from 1.0 to 15.0, or from 5.0 to 10.0.

### (Application of Coating Material)

The coating material according to the present embodiment can be suitably applied as a coating material for forming a protective layer of an article such as a spring, a stabilizer, a bumper, or a building material (such as a wall surface tile). The article may be a painted article.

Among these, the coating material according to the present embodiment is typically applied as a coating material for a spring.

Specifically, the article according to the present embodiment has, on at least a part of a surface thereof, a cured product layer (i.e., a coating layer) of the coating material for a spring according to the present embodiment.

The spring according to the present embodiment has, on at least a part of a surface thereof, a cured product layer of the spring coating material according to the present embodiment. The spring may be either a coil spring or a leaf spring.

Examples of aspects of providing the cured product layer of the coating material include the following:
1) For the purpose of preventing abnormal noise due to contact between spring wires the surface of a portion of a coil spring where the spring wires come into contact with each other;
2) For the purpose of coating protection, the surface of a seating part of a coil spring, or a part or the entire surface of the coil spring; and
3) For the purpose of impact relaxation and prevention of splintering, a part or the entire surface of an FRP leaf spring.

### (Application Method)

The method of applying the coating material according to the present embodiment is not particularly limited, and application methods such as dip application, spray application, roller application, a brush application method, and a flow coater method can be applied.

Here, in a case where the coating material according to the present embodiment is applied to a coil spring, since the thickness of the cured product layer to be formed is preferably 1 mm or more (particularly from 1 to 2 mm), there is a concern about sagging of the coating film.

Thus, it is also preferable to add a thickener to the coating material according to the present embodiment to increase the viscosity.

It is also preferable that an acrylate-based resin and a photopolymerization initiator be blended into the coating material according to the present embodiment in order to enable ultraviolet curing, and a surface layer portion of a coating film be irradiated with ultraviolet rays and cured immediately after the formation of the coating film.

### EXAMPLES

Examples of the present disclosure will be described below; however, the present disclosure is not limited to these examples in any way. In the following description, unless otherwise specified, "part(s)" and "%" relating to blending amounts (including content and additive amount) are all based on weight.

### <Examples 1 to 11 and Comparative Example 1>

Components (excluding isocyanates) in the amounts (by part(s)) shown in column "CO material (1)" in Table 1, which had been preheated to 50°C, were precisely weighed into a polycup and mixed using a planetary centrifugal mixer (ARE-310 manufactured by Thinky Corporation). The mixing conditions were set to 2000 rpm × 30 seconds.

Subsequently, isocyanates shown in Table 1 were added to the obtained solution, and mixed using a planetary centrifugal mixer (ARE-310 manufactured by Thinky Corporation). The mixing conditions were set to 2000 rpm × 30 seconds. A coating material was prepared.

In this manner, a coating material was prepared.

### <Examples 12 to 14>

A surface layer coating material (1) and an inner layer coating material (2) were respectively prepared using the components shown in the columns "CO material (1)" and "CO material (2)" in Table 1.

Except for the components used, the preparation conditions of the coating materials were the same as those of Example 1.

### <Evaluation>

The coating materials of Examples 1 to 11 and Comparative Example 1 were applied to SPCC steel sheets each having a width of 12.5 mm, a length of 70 mm, and a thickness of 3.2 mm, and then cured under conditions at 180°C for 10 minutes to prepare a test pieces (1) on which a cured product layer (coating layer) having a thickness of 2 mm was formed.

The surface coating material (1) and the inner surface coating material (2) of Examples 12 to 14 were applied to SPCC steel sheets each having a width of 12.5 mm, a length of 70 mm, and a thickness of 3.2 mm, and then cured under conditions at 180°C for 10 minutes after application to prepare a test pieces (2) on which a cured product layer (coating layer) having a total thickness of 2 mm, including a surface layer of 1 mm and an inner layer of 1 mm, was formed.

The following evaluation was performed using the test pieces.

### (Bubble Ratio and Average Diameter of Bubbles)

In accordance with the method described above, the bubble ratios of the surface layer, the inner layer, and the entire coating layer, as well as the average diameter of bubbles in the entire coating layer, were measured.

### (Evaluation of Abnormal Noise)

The prepared test piece was suspended with a cotton string, and a hammering test was conducted by striking the test piece from the coating layer side with an impulse hammer. The sound pressure at a frequency of 5000 Hz was measured.

Taking the sound pressure of Example 1 as a reference, the sound pressure difference (dB) of each example from the sound pressure of Example 1 was obtained.

The equipment used in the hammering test is as follows.

Impulse hammer: "GK-3100" manufactured by ONO SOKKI Co., Ltd.

Sound collection microphone: "LA-5570" manufactured by ONO SOKKI Co., Ltd.

Fast Fourier Transform (FFT) analyzer: "DS-3000" manufactured by ONO SOKKI Co., Ltd.

An evaluation was performed according to the following criteria.
A: The sound pressure difference is less than 20 dB
B: The sound pressure difference is 10 dB or more and less than 20 dB
C: The sound pressure difference is 3 dB or more and less than 10 dB
D: The sound pressure difference is 0 dB or more and less than 3 dB

### (Abrasion Loss 1)

The abrasion loss of the coating layer was measured using a Taber abrasion tester, in accordance with the method described above.

### (Tear Strength After Degradation)

The tear strength of the coating layer, after being exposed to an environment having a temperature of 85°C and a humidity of 85% for 240 hours, was measured in accordance with the method described above.

### (Abrasion Loss 2)

The abrasion loss at the contact portion with the coating layer was evaluated using a fatigue tester (linear torsion type dynamic fatigue tester "E10000") manufactured by Instron. Specifically, the procedure was as follows.

Silica sand was laid on the test piece, and the coating layer was then sandwiched between φ15 round rods coated with an epoxy powder coating having a film thickness of 100 µm. The round rods were vibrated 100,000 times under the conditions of a minimum load of 10 N and a maximum load of 3000 N, and the residual film thickness of the epoxy powder coating film on the round rods was measured.

### (Adhesive Shear Strength)

The adhesive shear strength of the coating layer was measured as follows.

An SPCC steel sheet having a thickness of 3.2 mm, a width of 25 mm, and a length of 70 mm was coated with an epoxy-based powder coating having a thickness of 100 µm. An adhesion pretreatment was then performed on the coating film, and the coating material was applied thereto. Subsequently, the coating material was sandwiched between another SPCC steel sheet subjected to the same coating and adhesion pretreatment, and it was heated and cured while maintaining the adhesive film thickness at 2 mm. That is, the coating material on the surface layer side was adhered to one SPCC steel sheet, and the coating material on the inner layer side was adhered to the other. The bonded area of the test piece was 25 mm in width and 12.5 mm in length.

The resulting tensile shear test piece was subjected to a tensile test under the conditions in accordance with JIS K 6850-1999, and the tensile shear strength was calculated.

Hereinafter, details of notations in Table 1 are as follows.

### -Macromolecular Polyol-

- Capa 7203: Copolymer of a polycarbonate-based polyol and a lactone-based polyol ("Capa 7203" manufactured by Ingevity Corporation)

### -Chain Extender-

- 1,4-BD: 1,4-Butanediol

### -Isocyanate-

- MP-102: 4,4'-Diphenylmethane diisocyanate ("MP-102" manufactured by BASF INOAC Polyurethanes Ltd.)

### -Foaming Agent-

- 920DE40d30: Thermally expandable microcapsule ("Expancel 920DE40d30", average particle diameter: 35 µm to 55 µm manufactured by Nippon Filite Co., Ltd.)

### -Foam Stabilizer-

- B 8737 LF2: Silicone-based foam stabilizer ("EGOSTAB B 8737 LF2" manufactured by Evonik)

### -Defoaming Agent-

- BYK A 530: Silicone-based defoaming agent ("BYK A 530" manufactured by BYK)

The measurement results of the physical characteristics of each example and the results of various tests are listed in Table 1 below.

**Table 1**

| Raw material classification | Raw material code | Comparative Example 1 | Comparative Example 2 | Example 1 | Example 2 | Example 3 | Example 4 | Example 5 | Example 6 |
|---|---|---|---|---|---|---|---|---|---|
| PCD-based polyol | Capa7203 | 17 | 17 | 17 | 17 | 17 | 17 | 17 | 17 |
| Chain extender | 1, 4-BG | 4.3 | 4.3 | 4.3 | 4.3 | 4.3 | 4.3 | 4.3 | 4.3 |
| MDI-based isocyanate | MP-102 | 22 | 22 | 22 | 22 | 22 | 22 | 22 | 22 |
| Foaming agent | 920DE40d30 | 0 | 0 | 0 | 0 | 0 | 0 | 0 | 0 |
| Water | H20 | 0 | 0.2 | 0.02 | 0.05 | 0.1 | 0.15 | 0.02 | 0.05 |
| Foaming stabilizer | B 8737 LF2 | 0 | 0.5 | 0.1 | 0.2 | 0.5 | 0.6 | 0.1 | 0.2 |
| Defoaming agent 1 | BYK A 530 | 0 | 0 | 0.2 | 0.2 | 0.2 | 0.2 | 0.4 | 0.4 |
| PCD-based polyol | Capa7203 | | | | | | | | |
| Chain extender | 1,4-BG | | | | | | | | |
| MDI-based isocyanate | MP-102 | | | | | | | | |
| Foaming agent | 920DE40d30 | | | | | | | | |
| Water | H20 | | | | | | | | |
| Foaming stabilizer | B 8737 LF2 | | | | | | | | |
| Defoaming agent | BYK A 530 | | | | | | | | |
| Bubble ratio difference between surface layer and inner laver | % | 0 | 0 | 5 | 7 | 13 | 15 | 4 | 8 |
| Bubble ratio in surface laver | % | 0 | 44 | 3 | 10 | 21 | 34 | 2 | 8 |
| Bubble ratio in inner laver | % | 0 | 44 | 8 | 17 | 34 | 49 | 6 | 16 |
| Bubble ratio in entire coating layer | % | 0 | 44 | 5.5 | 13.5 | 27.5 | 41.5 | 4 | 12 |
| Abnormal noise | Sound pressure difference (dB) | 0.0 | 29.0 | 9.0 | 14.0 | 30.0 | 34.0 | 7.0 | 13.0 |
| | | D | A | C | B | A | A | C | B |
| Abrasion loss 1 (abrasion loss of coating layer) | mg | 20 | 160 | 23 | 42 | 120 | 138 | 21 | 33 |
| Tear strength after degradation | N/mm | 150 | 38 | 136 | 115 | 82 | 49 | 140 | 119 |
| Abrasion loss 2 (residual film thickness of coating layer) | µm | 92 | 0 | 96 | 81 | 34 | 0 | 93 | 89 |
| Adhesive shear strength | MPa | 20 | 11.2 | 18.4 | 16.6 | 13.2 | 10.2 | 18.8 | 16.8 |

**Table 1-Continued**

| Raw material classification | Raw material code | Example 7 | Example 8 | Example 9 | Example 10 | Example 11 | Example 12 | Example 13 | Example 14 |
|---|---|---|---|---|---|---|---|---|---|
| PCD-based polyol | Capa7203 | 17 | 17 | 17 | 17 | 17 | 17 | 17 | 17 |
| Chain extender | 1, 4-BG | 4.3 | 4.3 | 4.3 | 4.3 | 4.3 | 4.3 | 4.3 | 4.3 |
| MDI-based isocyanate | MP-102 | 22 | 22 | 22 | 22 | 22 | 22 | 22 | 22 |
| Foaming agent | 920DE40d30 | 0 | 0 | 0 | 0 | 0 | 0 | 0 | 0 |
| Water | H20 | 0.1 | 0.02 | 0.05 | 0.1 | 0.15 | 0.05 | 0.15 | 0.3 |
| Foaming stabilizer | B 8737 LF2 | 0.5 | 0.1 | 0.2 | 0.5 | 0.6 | 0.2 | 0.6 | 0.6 |
| Defoaming agent 1 | BYK A 530 | 0.4 | 0.6 | 0.6 | 0.6 | 0.6 | 0 | 0 | 0 |
| PCD-based polyol | Capa7203 | | | | | | 17 | 17 | 17 |
| Chain extender | 1,4-BG | | | | | | 4.3 | 4.3 | 4.3 |
| MDI-based isocyanate | MP-102 | | | | | | 22 | 22 | 22 |
| Foaming agent | 920DE40d30 | | | | | | 0 | 0 | 0 |
| Water | H20 | | | | | | 0 | 0 | 0 |
| Foaming stabilizer | B 8737 LF2 | | | | | | 0 | 0 | 0 |
| Defoaming agent | BYK A 530 | | | | | | 0.1 | 0.1 | 0.1 |
| Bubble ratio difference between surface layer and inner laver | % | 17 | 3 | 18 | 33 | 51 | 13 | 46 | 74 |
| Bubble ratio in surface laver | % | 14 | 0 | 0 | 0 | 0 | 3 | 2 | 4 |
| Bubble ratio in inner laver | % | 31 | 3 | 18 | 33 | 51 | 16 | 48 | 78 |
| Bubble ratio in entire coating layer | % | 22.5 | 1.5 | 9 | 16.5 | 25.5 | 9.5 | 25 | 41 |
| Abnormal noise | Sound pressure difference (dB) | 20.8 | 3.3 | 11.0 | 15.0 | 23.0 | 12.0 | 24.0 | 33.0 |
| | | B | C | B | B | A | B | A | A |
| Abrasion loss 1 (abrasion loss of coating layer) | mg | 80 | 20 | 20 | 20 | 20 | 24 | 23 | 28 |
| Tear strength after degradation | N/mm | 95 | 147 | 130 | 115 | 98 | 127 | 97 | 69 |
| Abrasion loss 2 (residual film thickness of coating layer) | µm | 67 | 96 | 98 | 97 | 96 | 92 | 91 | 93 |
| Adhesive shear strength | MPa | 13.8 | 19.4 | 16.4 | 13.4 | 9.8 | 16.8 | 10.4 | 4.4 |

From the above results, it is found that the coating material of the present Examples can suppress the generation of abnormal noise.

It is also found that the coating material according to the present Examples, in which the bubble ratios of the surface layer and the inner layer are controlled, can form a coating layer having high mechanical strength.

The entire disclosure of Japanese Patent Application No. 2022-197522 is incorporated herein by reference.

All the literature, patent applications, and technical standards cited herein are also incorporated herein by reference to the same extent as if each individual literature, patent application, and technical standard were specifically and individually indicated to be incorporated by reference.

## Claims

1. A coating material, wherein, in a cured product layer after curing, a bubble ratio in an inner layer on a coated surface side is higher than a bubble ratio in a surface layer on a side opposite from the coated surface side.

2. The coating material according to claim 1, wherein the bubble ratio in the surface layer is from 0% to 30%, and the bubble ratio in the inner layer is from 3% to 70%.

3. The coating material according to claim 1, wherein an abrasion loss of the cured product layer after curing, as measured using a Taber abrasion tester, is 150 mg or less.

4. The coating material according to claim 1, wherein the cured product layer after curing has a tear strength of 40 N/mm or more after being exposed to an environment having a temperature of 85°C and a humidity of 85% for 240 hours.

5. The coating material according to claim 1, wherein the cured product layer after curing is a cured product having a urethane bond.

6. The coating material according to claim 1, which is for use in a spring.

7. A coating layer, wherein a bubble ratio in an inner layer on a coated surface side is higher than a bubble ratio in a surface layer on a side opposite from the coated surface side.

8. The coating layer according to claim 7, wherein the bubble ratio in the surface layer is from 0% to 30%, and the bubble ratio in the inner layer is from 3% to 70%.

9. The coating layer according to claim 7, wherein an abrasion loss, as measured using a Taber abrasion tester, is 150 mg or less.

10. The coating layer according to claim 7, which has a tear strength of 40 N/mm or more after being exposed to an environment having a temperature of 85°C and a humidity of 85% for 240 hours.

11. The coating layer according to claim 7, consisting of a cured product having a urethane bond.

12. The coating layer according to claim 7, which is for use in a spring.

13. A spring comprising the coating layer according to any one of claims 7 to 12 on at least a part of a surface thereof.
